# EUROPEAN PATENT APPLICATION

(11) **EP 4 635 775 A1**
(43) Date of publication of application: **22.10.2025**
(21) Application number: 24212890.8
(22) Date of filing: 14.11.2024
(51) Int. Cl.: B60L 3/00, B60L 50/64, H04W 4/80

(54) **BATTERY-PACK CONTROL SYSTEM USING SHORT-RANGED WIRELESS COMMUNICATION**

(30) Priority: 16.04.2024 KR 20240050756
(71) Applicant: POEN CO., LTD., Uiwang-si, Gyeonggi-do 16014 (KR)
(72) Inventor: YEO, Dong Min, 15848 Anseong-si, Gyeonggi-do (KR)
(74) Representative: Jung, Minkyu

(57) **Abstract**

According to an embodiment of the present disclosure, a battery-pack control system using short-range wireless communication comprises at least one battery module, installed inside the battery pack; at least one first wireless communication module, installed in the battery module, configured to receive control signals from external sources and to transmit management data of the battery module to external systems, and communicating through NFC (Near Field Communication)-based short-range wireless communication; at least one second wireless communication module, installed inside the battery pack, positioned close to the first wireless communication module(s), and communicating with the first wireless communication module(s) through NFC-based short-range wireless communication; and a Battery Management System (BMS) module, installed in the battery pack, configured to communicate with the vehicle's Electronic Control Unit (ECU) via CAN (Controller Area Network) communication, and to communicate with the first wireless communication module, the second wireless communication module, and external electronic devices through NFC communication.

## Description

### CROSS REFERENCE TO RELATED APPLICATION

The present application claims priority to Korean Patent Applications No. 10-2024-0050756, filed on April 16, 2024, the entire contents of which are incorporated herein for all purposes by this reference.

### BACKGROUND

### Technical Field

The present disclosure relates to a battery-pack control system utilizing short-ranged wireless communication. More specifically, the present invention provides a battery-pack control system that leverages Near Field Communication (NFC) for seamless communication between battery modules, between battery modules and the battery-pack control system module, and between the battery-pack control system module and external electronic devices.

### Description of the Related Art

In general, an Electric Vehicle (EV) refers to a vehicle that operates using batteries and electric motors, without relying on fossil fuels or combustion engines.

To supply the high-power battery packs required for electric vehicles, multiple secondary battery cells are connected in series and parallel to form a battery pack. In other words, to manage these battery cells safely and efficiently, they are assembled into modules and further into packs before being installed in electric vehicles.

Specifically, cells, modules, and packs are organizational units for the batteries. A battery module is formed by grouping several battery cells, and multiple battery modules are combined to create a battery pack (hereinafter referred to as "battery-pack"). To construct a battery-pack, multiple battery modules are assembled, with the addition of components like a Battery Management System (BMS) and cooling systems. The final battery configuration installed in electric vehicles takes the form of this battery-pack.

Traditionally, various communication methods have been employed to control such battery-packs. However, the use of fast and secure communication methods like NFC has proven to be difficult. Even when NFC communication was utilized, issues between battery modules remained unresolved, with no effective means to address these problems.

### SUMMARY

The present embodiment provides a battery-pack control system using short-range wireless communication, which enables seamless communication through NFC communication between battery modules, between battery modules and the battery-pack control system module, and between the battery-pack control system module and external electronic devices.

According to an embodiment of the present disclosure, there may be provided a battery-pack control system using short-range wireless communication, comprising: at least one battery module, installed inside the battery pack; at least one first wireless communication module, installed in the battery module, configured to receive control signals from external sources and to transmit management data of the battery module to external systems, and communicating through NFC (Near Field Communication)-based short-range wireless communication; at least one second wireless communication module, installed inside the battery pack, positioned close to the first wireless communication module(s), and communicating with the first wireless communication module(s) through NFC-based short-range wireless communication; and a Battery Management System (BMS) module, installed in the battery pack, configured to communicate with the vehicle's Electronic Control Unit (ECU) via CAN (Controller Area Network) communication, and to communicate with the first wireless communication module, the second wireless communication module, and external electronic devices through NFC communication.

Objectives of the present disclosure are not limited to those described above and objectives not stated above will be clearly understood to those skilled in the art from the specification and the accompanying drawings.

According to the present embodiment, the use of NFC communication enables seamless communication between battery modules, between battery modules and the battery-pack control system module, and between the battery-pack control system module and external electronic devices. Based on this communication framework, it is possible to quickly and efficiently monitor key information such as the performance, capacity, and lifespan of the battery. Furthermore, this system provides the advantage of minimizing the risks of physical damage and network security issues.

Effects of the present disclosure are not limited to those described above and effects not stated above will be clearly understood to those skilled in the art from the specification and the accompanying drawings.

### BRIEF DESCRIPTION OF THE DRAWINGS

The above and other objectives, features and other advantages of the present disclosure will be more clearly understood from the following detailed description when taken in conjunction with the accompanying drawings, in which:
Fig. 1 is a diagram illustrating the structure of a battery module installed in a vehicle according to various embodiments of the present invention.
Fig. 2 shows a communication block diagram for the battery module installed in a vehicle according to various embodiments of the present invention.
Fig. 3 is an exemplary flowchart explaining the operation of the system during vehicle operation according to various embodiments.
Fig. 4 to Fig. 6 are exemplary diagrams illustrating communication methods for the vehicle's communication system according to various embodiments.

### DETAILED DESCRIPTION

Hereinafter, various embodiments of this document will be described with reference to the accompanying drawings. The embodiments and the terms used therein are not intended to limit the technology described in this document to specific embodiments but should be understood to include various modifications, equivalents, and/or alternatives of these embodiments. In the description of the drawings, similar reference numerals may be used for similar components. Singular expressions can include plural forms unless clearly indicated otherwise by the context. In this document, expressions such as "A or B" or "at least one of A and/or B" may include all possible combinations of the listed items. Expressions such as "first," "second," "primary," or "secondary" may modify corresponding components without indicating order or importance and are used merely to distinguish one component from another.

When a certain (e.g., first) component is said to be "connected to" or "in communication with" another (e.g., second) component, it can mean that the certain component is directly connected to or in communication with the other component, or connected through another (e.g., third) component.

In this document, the phrase "configured to" (or "set to") may be used interchangeably, depending on the context, with expressions such as "suitable for," "capable of," "adapted to," "modified to," "made to," or "designed to." In certain cases, the expression "a device configured to" may imply that the device, together with other devices or components, is capable of performing the specified function. For example, the phrase "a processor configured to perform A, B, and C" may refer to a dedicated processor (e.g., an embedded processor) specifically designed for those operations, or to a general-purpose processor (e.g., a CPU or application processor) capable of performing the specified operations by executing one or more software programs stored in a memory device.

The objectives, features, and advantages of the present disclosure will be made clearer through the following detailed description related to the accompanying drawings. The present disclosure may be modified in various ways and implemented by various exemplary embodiments, so that specific exemplary embodiments are shown in the drawings and will be described in detail hereafter.

Like reference numerals fundamentally indicate the same components throughout the specification. Components having the same functions within the same scopes in drawings of embodiments are described with the same reference numerals, and repeated description thereof is omitted.

In the following embodiments, singular forms are intended to include plural forms unless the context clearly indicates otherwise. In the following embodiments, terms such as "include" or "have" mean that the features or components described herein exist without excluding the possibility that one or more other features or components are added.

When an embodiment can be implemented in another way, specific processes may be performed in order different from the description. For example, two sequentially described processes may be substantially simultaneously performed or may be performed in the reverse order of the described order.

### [A Structure of a battery module]

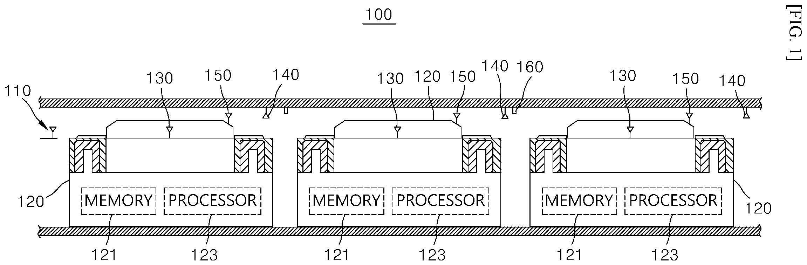

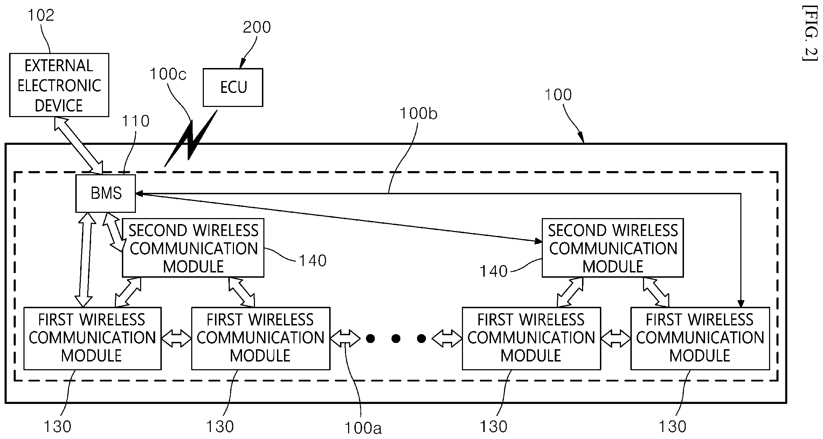

Hereafter, a structure of a battery module is described with reference to FIG. 1 and FIG. 2.

FIG. 1 is an exemplary diagram illustrating the structure of a battery module installed in a vehicle according to various embodiments of the present invention.

FIG. 2 shows a communication block diagram of the battery module installed in a vehicle according to various embodiments of the present invention.

The battery-pack 100 used in an electric vehicle according to this embodiment may include a battery management system (BMS) module 110, battery modules 120, a first wireless communication module 130, a second wireless communication module 140, and a camera module 150.

As an example, as shown in FIG. 1, the battery-pack 100 is housed in a housing (not shown) and constitutes the final form of a battery system installed in an electric vehicle. It includes the BMS module 110, battery modules 120, a first wireless communication module 130, a second wireless communication module 140, and a camera module 150. Additionally, it may comprise components such as a cooling plate/system, battery mounting bolts, Power Relay Assembly (PRA) high-voltage connectors, safety plugs, impact protection devices for the lower part of the battery, and battery security/protection systems or devices.

Moreover, although not explicitly shown, the battery-pack 100 can be configured to operate in series and/or parallel, and the battery pack 100 can be easily reconfigured based on user or external settings.

As shown in FIG. 1 and FIG. 2, the Battery Management System (BMS) module 110 is installed in the battery-pack 100 and is configured to communicate with the vehicle, s Electronic Control Unit (ECU) 200 via CAN (Controller Area Network) communication 100c. It can also communicate with the first wireless communication module 130, the second wireless communication module 140, and external electronic devices 102 through NFC (Near Field Communication) 100a.

For example, the BMS module 110, installed in an electric vehicle, measures the current, voltage, and temperature of the battery-pack 100 based on input from the camera module 150 and other sensor modules (not shown). This data is used to maintain the performance of the battery-pack 100. Furthermore, the BMS module 110 manages the vehicle's battery efficiently to ensure stable driving, predicts the optimal replacement time for the battery (based on the performance, capacity, and lifespan of the battery-pack 100), and identifies potential battery issues in advance to prevent accidents.

Additionally, the BMS module 110 can transmit various status signals of the battery-pack 100 to the ECU 300, the vehicle' s control unit, via CAN communication 100c. It can also receive various control signals for the battery-pack 100 from the ECU 300 through the same CAN communication 100c.

The BMS module 110 is further configured to forward control data received from the ECU 300 to the first and second wireless communication modules through NFC communication 100a and/or Bluetooth communication 100b. It can also transmit various status signals of the battery-pack 100 to external electronic devices 102 via NFC communication 100a.

As shown in FIG. 1, at least one battery module 120 can be installed inside the battery-pack 100. For example, the battery module 120 can consist of a battery assembly, where multiple battery cells (not shown) are grouped together within a frame to protect them from external shocks, heat, and vibrations. The battery module 120 is composed of multiple cells connected in series and/or parallel and can be embedded within a mechanical structure.

As shown in FIG. 1, the battery module 120 may further include memory 121 and a processor 123. Memory 121 may include volatile and/or non-volatile memory. For example, memory 121 can store commands or data related to at least one other component of the battery module 120. In one embodiment, memory 121 can store software and/or programs. Additionally, memory 121 can store usage data and status logs of the battery module 120. The usage data may consist of records for tracking the history and performing status analysis of the battery module 120.

The processor 123 may include a central processing unit (CPU), an application processor, or a communication processor (CP), among others. The processor 123 is configured to perform operations and data processing related to the control and/or communication of at least one other component of the battery module 120. For example, the processor 123 can acquire and record data from the battery module 120, store the acquired data in memory 121, and transmit and receive information to and from the battery management system (BMS) module 110 using the first wireless communication module 130 and the third wireless communication module 150.

At least one first wireless communication module 130 can be installed in the battery module 120, as shown in FIG. 1 and FIG. 2. This module can receive control signals from external sources and transmitting management data of the battery module 120 to external systems. It communicates through NFC (Near Field Communication)-based short-range wireless communication 100a. The first wireless communication module 130 integrates NFC technology, which enables communication between two electronic devices when they are in proximity. It performs communication with other first wireless communication modules, second wireless communication module 140, and the battery management system (BMS) module 110 by using the magnetic field and current formed between antennas. Additionally, the first wireless communication module 130 supports encrypted data transmission, facilitating secure communication between the battery module 120 and the BMS module 110. It can transmit data within 0.1 seconds, providing enhanced security, short setup times, and quick transmission. While its limited range may pose a challenge, the use of multiple battery modules and second wireless communication modules 140 allows full communication coverage within the battery-pack 100.

As an example, the first wireless communication module 130 may include a harvesting module (not shown) installed inside, which converts energy obtained from external sources into electricity. The harvesting module is a type of energy harvesting technology that collects and recycles unused energy. Specifically, it converts wasted energy from the electric vehicle into electrical energy, which is then supplied to the first wireless communication module 130 for maximum utilization. To achieve this, the harvesting module is designed to collect energy through thermoelectric, voltage, or electromagnetic methods.

At least one second wireless communication module 140 can also be installed inside the battery-pack 100, close to the first wireless communication modules 130, as shown in FIG. 1 and FIG. 2. It communicates with the first wireless communication modules 130 through NFC-based short-range wireless communication 100a. The second wireless communication module 140, as shown in FIG. 1 and FIG. 2, is placed between the individual first wireless communication modules 130 to facilitate close-range communication using NFC technology. Since the second wireless communication module 140 has a similar structure to the first wireless communication module 130, a detailed description is omitted. As an example, the second wireless communication module 140 may also include a harvesting module (not shown) that converts externally obtained energy into electricity. The structure and functionality of this harvesting module are identical to those described above, and thus further explanation is omitted.

At least one third wireless communication module 150 can be installed in the battery module 120, as shown in FIG. 1. The third wireless communication module 150 can receive control signals from external sources and transmit management data of the battery module 120 to external systems. It communicates with the battery-pack control system module 110 using Bluetooth-based short-range wireless communication 100b.

The third wireless communication module 150 can be configured to operate in the ISM (Industrial, Scientific, and Medical) frequency band of 2400-2483.5 MHz. To prevent interference from other systems using adjacent frequencies, the module may use the 2402-2480 MHz range, excluding 2 MHz after 2400 MHz and 3.5 MHz before 2483.5 MHz, providing 79 channels. The system may employ frequency hopping to prevent signal interference.

The ISM band refers to a set of frequency ranges allocated for industrial, scientific, and medical uses that do not require a license for radio communication. Common uses include amateur radio, wireless LAN, and Bluetooth. Frequency hopping is a technique in which the system quickly switches between multiple channels following a specific pattern, transmitting small packets on each channel.

The third wireless communication module 150 can perform 1600 hops per second across the 79 available channels, and synchronization of the hopping pattern between Bluetooth devices is required to establish communication. Based on this, the third wireless communication module 150 can facilitate communication between the battery module 120 and the battery-pack control system module 110.

At least one camera module 160 can be installed inside the battery-pack 100 to capture images of the battery module 120, the first wireless communication module 130, and the second wireless communication module 140.

For example, the camera module 160 can be used as an RGB camera module or an infrared thermal camera module. It can detect light within the visible spectrum, including reflected light from reflective sources such as lenses or mirrors or any other external light source projected onto the surface of an object. The camera module 160 may typically output Bayer images, a standard image format, and it can be used in various devices such as vehicles and smart appliances for capturing photos and videos.

The external electronic device 102 according to various embodiments of this document may include, for example, at least one of a smartphone, tablet PC, desktop PC, laptop PC, netbook computer, workstation, or server. Additionally, the external electronic device 102 can receive various status data signals related to the battery-pack 100 through NFC communication 100a with the battery management system (BMS) module, and can input commands externally based on the ECU 300.

### [A Process for battery-pack control system using wireless communication]

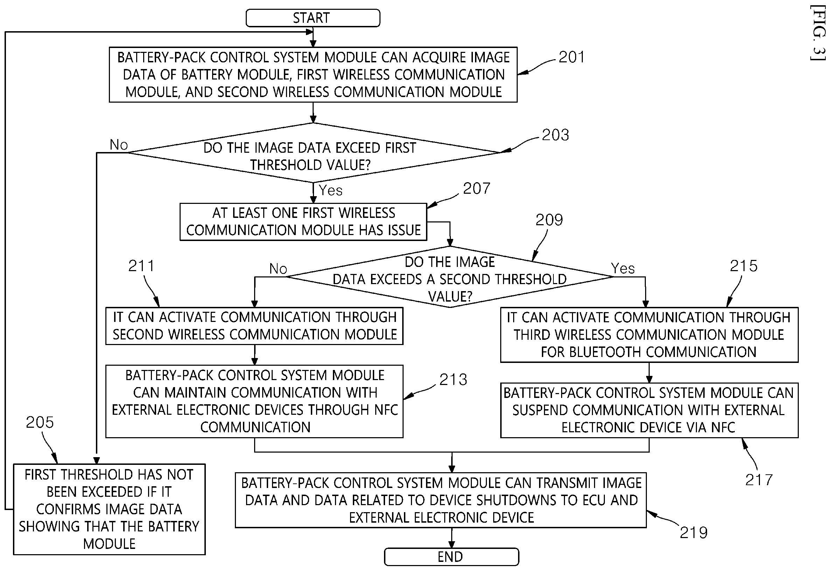

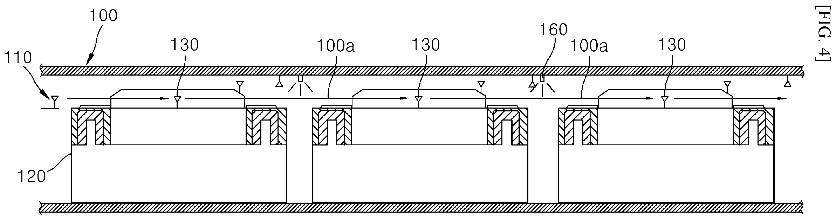

FIG. 3 is an exemplary flowchart explaining the method by which the system operates during vehicle driving according to various embodiments. FIGS. 4 to 6 are exemplary diagrams illustrating communication methods for vehicle communication according to various embodiments.

In operation 201, the battery-pack control system module 110, as shown in FIG. 4, can acquire image data of the battery module 120, the first wireless communication module 130, and the second wireless communication module 140 through the camera module 160. For example, the image data can be composed of RGB camera images showing the first and second wireless communication modules 130 and 140 in operation, images showing them maintained in their installed positions, or damaged images indicating that they are no longer in their original positions. It can also include thermal images showing abnormal heat generation in the first wireless communication module 130, thermal energy images of the battery module 120 during operation, or images indicating a fire during operation, encompassing various states of the battery module 120, the first wireless communication module 130, and the second wireless communication module 140. The battery-pack control system module 110 can use the image data to verify the status of the battery module 120, the first wireless communication module 130, and the second wireless communication module 140.

In operation 203, the battery-pack control system module 110 can determine whether the image data exceeds a first threshold value. For example, the first threshold value can include image data showing that at least one of the battery module 120 or the first wireless communication module 130 has been displaced due to external vibrations or impacts, image data showing separation between the battery module 120 and the first wireless communication module 130, or detection of an abnormal state in the operation of the first wireless communication module 130. This threshold can also be considered exceeded if the detected state persists for a predefined first period.

Specifically, the battery-pack control system module 110 can determine that the first threshold has been exceeded if at least one of the battery module 120 or the first wireless communication module 130 is displaced and remains so for a predefined first period (e.g., 5 seconds after displacement) as monitored by the camera module 160. Additionally, if a separation between the battery module 120 and the first wireless communication module 130 is detected and persists for the predefined first period (e.g., 5 seconds), it can also be considered that the first threshold has been exceeded. Similarly, the battery-pack control system module 110 can determine that the first threshold has been exceeded if an abnormality in the operation of the first wireless communication module 130 is detected and continues for the predefined first period as monitored by the camera module 160. The battery-pack control system module 110 may also include functionality to assess whether vibrations affecting the battery module 120 or the first wireless communication module 130 persist for the predefined first period (e.g., 5 seconds), thereby determining that the first threshold value has been exceeded.

In operation 205, if the battery-pack control system module 110 determines that the image data is below the first threshold value, it can assess that the second wireless communication module 140 is operating normally, as shown in FIG. 4. Specifically, the battery-pack control system module 110 can determine that the first threshold has not been exceeded if it confirms image data showing that the battery module 120 or the first wireless communication module 130 remains in position, that the connection between the battery module 120 and the first wireless communication module 130 is maintained, or that there is no detected abnormality in the operation of the first wireless communication module 130. Additionally, the battery-pack control system module 110 can maintain NFC communication 100a (see the arrows in FIG. 4) by operating only the first wireless communication module 130 without activating the second wireless communication module 140, and can continue to perform this operation by returning to operation 201 until the first threshold is exceeded.

On the other hand, if the battery-pack control system module 110 determines in operation 205 that the image data is above the first threshold value, then in operation 207, the battery-pack control system module 110 can assess that there is an issue with at least one first wireless communication module 130. Specifically, the battery-pack control system module 110 can detect that the first threshold has been exceeded if it confirms image data showing that at least one of the battery module 120 or the first wireless communication module 130 has been displaced due to external vibrations or impacts, image data indicating a separation between the battery module 120 and the first wireless communication module 130, or if it identifies an abnormality in the operation of the first wireless communication module 130 and the detected condition persists for a predefined first period (e.g., more than 5 seconds).

Additionally, the battery-pack control system module 110 can identify that there is an issue with the battery module 120 where the first threshold was exceeded and can store this data in memory (not shown).

In operation 209, the battery-pack control system module 110 can determine whether the image data exceeds a second threshold value. For example, the second threshold value can include image data showing overheating and/or fire occurring in the battery module 120, the first wireless communication module 130, and the second wireless communication module 140, or image data indicating abnormalities in the operation of the first wireless communication module 130 and second wireless communication module 140. It can be considered that the second threshold has been exceeded if the detected condition persists for a predefined second period.

Specifically, the battery-pack control system module 110 can determine that the second threshold has been exceeded if it verifies image data showing overheating and/or fire from the battery module 120, the first wireless communication module 130, or the second wireless communication module 140, and this state persists for a predefined second period (e.g., more than 10 seconds) as monitored by the camera module 160. Additionally, the battery-pack control system module 110 can confirm image data showing abnormalities in the operation of the first wireless communication module 130 or second wireless communication module 140, and if this state persists for the predefined second period (e.g., more than 10 seconds), it can determine that the second threshold has been exceeded. Furthermore, the battery-pack control system module 110 can include functionality to identify image data showing smoke detected from at least one of the battery module 120, the first wireless communication module 130, or the second wireless communication module 140, and if this condition continues for the predefined second period (e.g., more than 10 seconds) as monitored by the camera module 160, it can determine that the second threshold has been exceeded.

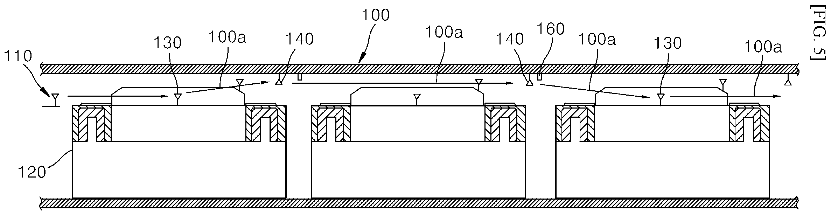

In operation 211, as shown in FIG. 5, if the battery-pack control system module 110 determines that the image data exceeds the first threshold value but is below the second threshold value, it can activate communication through the second wireless communication module 140. Specifically, if the battery-pack control system module 110 confirms image data indicating that overheating and/or fire has not occurred in the battery module 120, the first wireless communication module 130, or the second wireless communication module 140, or if it verifies image data showing that there is no detected abnormality in the operation of the first wireless communication module 130 and second wireless communication module 140, it can determine that the second threshold has not been exceeded.

Subsequently, as shown in FIG. 5, the battery-pack control system module 110 can stop the operation of the battery module 120 and the first wireless communication module 130 that have exceeded the first threshold and activate the adjacent second wireless communication module 140 to perform NFC communication 100a (see the arrows in FIG. 5). This allows for the temporary suspension of the operation of the battery module 120 and the first wireless communication module 130, while the second wireless communication module 140 maintains NFC communication 100a. The battery-pack control system module 110 can use this configuration to notify the ECU 300 and/or external electronic devices 102 about the issues detected in the battery module 120 and first wireless communication module 130.

In operation 213, the battery-pack control system module 110 can maintain communication with external electronic devices through NFC communication 100a. For example, the battery-pack control system module 110 can verify that no issues such as fire or excessive heat have occurred inside the battery-pack 100. Since this involves a simple structural change, it can confirm that there is no problem with allowing user or operator access, thereby enabling stable monitoring of the battery-pack 100's status through NFC communication 100a with the external electronic device 102.

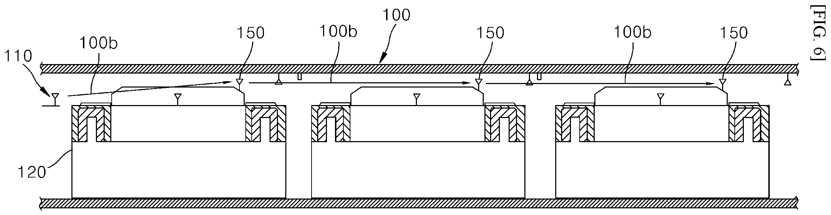

On the other hand, if the battery-pack control system module 110 determines in operation 209 that the image data exceeds the second threshold value, then in operation 215, as shown in FIG. 6, it can activate communication through the third wireless communication module 150 for Bluetooth communication 100b. Specifically, the battery-pack control system module 110 can determine that the second threshold has been exceeded if it confirms image data showing overheating and/or fire in the battery module 120, the first wireless communication module 130, or the second wireless communication module 140, or detects image data indicating abnormalities in the operation of the first and second wireless communication modules 130 and 140. If the detected state persists for a predefined second period (e.g., more than 10 seconds from the time of detection), it can be concluded that the second threshold has been exceeded.

Subsequently, as shown in FIG. 5, the battery-pack control system module 110 can stop the operation of the battery module 120, the first wireless communication module 130, and the second wireless communication module 140 that exceeded the second threshold, and activate the adjacent third wireless communication module 150 to perform Bluetooth communication 100b (see the arrows in FIG. 6). This occurs when the battery-pack control system module 110 determines that maintaining NFC communication 100a, which requires close proximity, is not feasible. Instead, Bluetooth communication 100b can be used to temporarily maintain communication between the multiple battery modules 120 and between the battery modules 120 and the battery-pack control system module 110.

In operation 217, the battery-pack control system module 110 can suspend communication with the external electronic device via NFC. For example, the battery-pack control system module 110 can confirm that issues such as fire or excessive heat have occurred inside the battery-pack 100, indicating a serious communication problem with the battery module 120. This ensures that users or operators do not approach and risk accidents, allowing precautionary measures against fire to be taken based on this information.

In operation 219, the battery-pack control system module 110 can transmit image data and data related to device shutdowns to the ECU 300 and the external electronic device 102. Specifically, as shown in FIG. 2, the battery-pack control system module 110 can use CAN communication 100c to transmit data to the ECU 300, confirming issues in the battery module 120 or the first wireless communication module 130 that exceed the first or second threshold values. Additionally, it can use NFC communication 100a to transmit data to the external electronic device 102, confirming the battery module 120 and first wireless communication module 130 that exceeded the first threshold. The battery-pack control system module 110 can also alert the external electronic device 102 to data exceeding the second threshold through the ECU 300.

Based on this, the present embodiment allows easy identification and repair of the battery module 120 and the first wireless communication module 130 where issues have been detected.

According to the present embodiment, the use of NFC communication facilitates seamless communication between battery modules, between battery modules and the battery-pack control system module, and between the battery-pack control system module and external electronic devices. This allows for quick and efficient status checks on critical information such as battery performance, capacity, and lifespan, while minimizing the risk of physical damage and network security issues.

According to various embodiments, the battery-pack control system using short-range wireless communication comprises: at least one battery module, installed inside the battery-pack; at least one first wireless communication module, installed in the battery module, configured to receive control signals from external sources and transmit management data of the battery module to external systems, communicating through NFC (Near Field Communication)-based short-range wireless communication; at least one second wireless communication module, installed inside the battery-pack and positioned close to the first wireless communication module(s), communicating with the first wireless communication module(s) through NFC-based short-range wireless communication; and a Battery Management System (BMS) module, installed in the battery-pack, configured to communicate with the vehicle, s Electronic Control Unit (ECU) via CAN (Controller Area Network) communication and to communicate with the first wireless communication module, the second wireless communication module, and external electronic devices using NFC communication.

According to various embodiments, the first wireless communication module and the second wireless communication module each include a harvesting module installed inside, configured to convert energy obtained from external sources into electricity.

According to various embodiments, the at least one battery module further includes memory and a processor. The processor is configured to: acquire and record data from the battery module, store the acquired and recorded data in the memory, and transmit and receive information to and from the battery management system module using the first wireless communication module and the second wireless communication module.

According to various embodiments, the battery-pack further includes a camera module installed inside, configured to capture images of the battery module, the first wireless communication module, and the second wireless communication module. The battery management system module is configured to activate the camera module to acquire image data of the battery module and the first wireless communication module. If the image data is determined to exceed a predefined first threshold value, the operation of the first wireless communication module is halted, and the second wireless communication module is activated. Additionally, the battery management system module is configured to transmit and receive the determined data to and from the ECU and external electronic devices.

According to various embodiments, the battery-pack further includes a third wireless communication module installed in the battery module, configured to receive control signals from external sources and transmit management data of the battery module, and to communicate with the battery management system module through Bluetooth-based short-range wireless communication. The battery management system module is configured to, when the image data is determined to exceed a predefined second threshold value, terminate the NFC-based communication system for the battery management system and the first wireless communication module, control the system to operate using Bluetooth communication, and transmit the determined data to the ECU and external electronic devices.

According to various embodiments, the first threshold value includes image data confirming that at least one of the battery module or the first wireless communication module has been displaced due to external vibrations or shocks, image data showing separation between the battery module and the first wireless communication module, or detection of abnormalities in the operation of the first wireless communication module. It also includes cases where the detected condition persists for a predefined first period. The second threshold value includes image data confirming overheating and/or fire in the battery module, the first wireless communication module, or the second wireless communication module, or detection of abnormalities in the operation of the first and second wireless communication modules, and cases where the detected condition persists for a predefined second period.

The term "module" or "unit" as used in this document includes hardware, software, or firmware units and can be used interchangeably with terms like logic, logic blocks, components, or circuits. A "module" or "unit" may refer to an integrated part or the minimum unit or a portion that performs one or more functions. It can be implemented mechanically or electronically and can include, for example, ASIC (application-specific integrated circuit) chips, FPGAs (field-programmable gate arrays), or programmable logic devices, known or to be developed in the future, which can be executed by the processor 120.

Devices (e.g., modules or their functions) or methods (e.g., operations) according to various embodiments can be implemented in the form of program modules stored as instructions on a computer-readable storage medium (e.g., memory 130). When executed by a processor (e.g., processor 120), the processor performs the corresponding functions. Computer-readable storage media can include hard disks, floppy disks, magnetic media (e.g., magnetic tape), optical media (e.g., CD-ROM, DVD, magneto-optical media), embedded memory, etc. The instructions can include compiler-generated code or code executable by an interpreter.

Modules or program modules according to various embodiments may include at least one of the aforementioned components, omit some components, or include additional components. Operations performed by modules, program modules, or other components in various embodiments may be executed sequentially, in parallel, iteratively, or heuristically. At least some operations may be executed in a different order, omitted, or include additional operations.

The embodiments disclosed in this document are presented for the purpose of illustrating and explaining the technology, and are not intended to limit the scope of the present disclosure. Therefore, the scope of the present disclosure should be interpreted to include all modifications or various other embodiments based on the technical idea of the present disclosure.

## Claims

1. A battery-pack control system using short-range wireless communication, comprising:
at least one battery module, installed inside the battery pack;
at least one first wireless communication module, installed in the battery module, configured to receive control signals from external sources and to transmit management data of the battery module to external systems, and communicating through NFC (Near Field Communication)-based short-range wireless communication;
at least one second wireless communication module, installed inside the battery pack, positioned close to the first wireless communication module(s), and communicating with the first wireless communication module(s) through NFC-based short-range wireless communication; and
a Battery Management System (BMS) module, installed in the battery pack, configured to communicate with the vehicle's Electronic Control Unit (ECU) via CAN (Controller Area Network) communication, and to communicate with the first wireless communication module, the second wireless communication module, and external electronic devices through NFC communication.

2. The battery-pack control system using short-range wireless communication according to Claim 1, wherein the first wireless communication module and the second wireless communication module each include a harvesting module installed inside, configured to convert externally obtained energy into electricity.

3. The battery-pack control system using short-range wireless communication according to Claim 1 or 2, wherein the at least one battery module further includes memory and a processor inside, and the processor is configured to:
acquire and record data from the battery module,
store the acquired and recorded data in the memory, and
transmit and receive information to and from the battery management system (BMS) module using the first and second wireless communication modules.

4. The battery-pack control system using short-range wireless communication according to any one of Claims 1 to 3, wherein the battery pack further includes:
a camera module installed inside, configured to capture images of the battery module, the first wireless communication module, and the second wireless communication module.

5. The battery-pack control system using short-range wireless communication according to any one of Claims 1 to 4, wherein the battery management system (BMS) module is configured to:
operate the camera module to acquire image data of the battery module and the first wireless communication module,
if the acquired image data exceeds a predefined first threshold value, stop the operation of the first wireless communication module and operate the second wireless communication module, and
transmit and receive the determined data to and from the ECU (Electronic Control Unit) and external electronic devices.

6. The battery-pack control system using short-range wireless communication according to any one of Claims 1 to 5, wherein the battery pack further includes, a third wireless communication module, installed in the battery module, configured to receive control signals from external sources and transmit management data of the battery module to external systems. The third wireless communication module communicates with the battery-pack control system module using Bluetooth-based short-range wireless communication.

7. The battery-pack control system using short-range wireless communication according to Claim 5 or 6, the battery management system (BMS) module is configured to:
if the acquired image data exceeds a predefined second threshold value, stop the NFC-based communication system between the battery management system and the first wireless communication module, and switch to operation via Bluetooth communication, and
transmit the determined data to the ECU and external electronic devices.

8. The battery-pack control system using short-range wireless communication according to any one of Claims 5 to 7, wherein the first threshold value includes:
detection of image data showing that at least one of the battery module or the first wireless communication module has shifted from its original position due to external vibrations or shocks,
detection of image data showing disconnection between the battery module and the first wireless communication module, or
detection of abnormalities in the operation of the first wireless communication module,
and the first threshold value is met if the abnormal condition persists for a predefined first period.

9. The battery-pack control system using short-range wireless communication according to Claim 7 or 8, wherein the second threshold value includes:
detection of overheating and/or fire occurring in the battery module, the first wireless communication module, or the second wireless communication module, or
detection of operational abnormalities in the first and second wireless communication modules,
and the second threshold value is met if the detected abnormality persists for a predefined second period.
